# EUROPÄISCHE PATENTSCHRIFT

(11) **EP 2 426 043 B1**
(45) Veröffentlichungstag und Bekanntmachung des Hinweises auf die Patenterteilung: **26.12.2012**
(21) Anmeldenummer: 11177574.8
(22) Anmeldetag: 15.08.2011
(51) Int. Cl.: B62M 11/16

(54) **Fahrradnabengetriebe**
Bicycle hub gear
Engrenage de moyeu de bicyclette

(30) Priorität: 01.09.2010 DE 202010012075 U; 18.12.2010 DE 202010016798 U; 13.12.2010 EP 10194699
(43) Veröffentlichungstag der Anmeldung: 07.03.2012
(73) Patentinhaber: Canyon Bicycles GmbH, 56073 Koblenz (DE)
(72) Erfinder: Smolik, Hans-Christian, 84163 Freinberg-Marklkofen (DE)
(74) Vertreter: von Kreisler Selting Werner

(56) Entgegenhaltungen:
- DE-A1- 10 148 807
- US-A- 3 908 807
- US-A- 4 052 914

## Beschreibung

Die Erfindung betrifft ein Fahrradnabengetriebe, das insbesondere für Rennräder, Mountainbikes, Trekkingfahrräder oder E-Bikes geeignet ist.

Bei Mountainbikes und Trekkingfahrrädern sind Kassetten mit sieben oder mehr Ritzeln, sowie drei Kettenblätter üblich. Hierdurch ist eine große Spreizung der Gänge realisiert. Der Platzbedarf für drei Kettenblätter ist jedoch im Bereich des Tretlagers sehr groß. Ferner muss Platz für den vorderen Umwerfer vorgesehen sein. Des Weiteren besteht der Nachteil, dass beim Vorsehen von drei Kettenblättern, insbesondere aufgrund der sich stark unterscheidenden Zähnezahl, die Kette leicht abspringen kann. Ferner können aufgrund der stark unterschiedlichen Zähnezahl nur geringe Schaltgeschwindigkeiten realisiert werden.

Zur Vermeidung von zwei Kettenblättern wurde das sogenannte Hammerschmidt-Getriebe entwickelt. Hierbei handelt es sich um ein Planetengetriebe, das die zwei Kettenblätter ersetzt. Das Hammerschmidt-Getriebe ist unmittelbar mit der Tretkurbel verbunden und entsprechend der Kettenblätter zwischen dem Tretlager und der Tretkurbel angeordnet. Die Kraftübertragung auf die an der Hinterradnabe vorgesehene Ritzelkassette erfolgt über eine Kette, wobei die Ritzelschaltung mit einem üblichen Schaltwerk realisiert ist. Das Hammerschmidt-Getriebe weist jedoch ein hohes Gewicht und eine geringe Spreizung auf. Das Hammerschmidt-Getriebe ist daher im Allgemeinen nur für sogenannte Freeride-Fahrräder, nicht jedoch für Mountainbikes und Trekkingfahrräder geeignet. Dies ist insbesondere der Fall, da das Hammerschmidt-Getriebe nur zwei Gänge aufweist und somit nur eine geringe Spreizung realisiert werden kann.

Ferner ist die sogenannte Rohloff-Nabe bekannt. Hierbei handelt es sich um ein in die Hinterradnabe integriertes Getriebe. Durch die Rohloff-Nabe werden die Ritzel und das zweite Kettenblatt ersetzt. Mit der Rohloff-Nabe werden üblicherweise 14 Gänge realisiert. Da die Rohloff-Nabe sehr groß baut und schwer ist, ist diese für Mountainbikes nicht geeignet.

Bei derartigen Fahrradnabengetrieben erfolgt das Schalten über Schaltklinken. Mit Hilfe der Klinken erfolgt ein Verbinden oder Lösen von ineinander angeordneten Zahnringen mit unterschiedlichem Durchmesser. Die Klinken sind in einem der beiden Ringe jeweils über axial verlaufende Achsen schwenkbar gehalten. Über einen Betätigungsmechanismus erfolgt ein Verschwenken der mehreren Klinken, so dass diese mit einer Verzahnung des anderen Zahnrings in oder außer Eingriff gebracht werden. Derartige Fahrradnabengetriebe weisen daher eine äußerst komplexe Mechanik und eine hohe Bauteilezahl auf. Hieraus resultiert ein relativ hohes Gewicht. Des Weiteren ist der Platzbedarf für derartige Klinken-Verbindungen relativ groß. Dies ist insbesondere bei Fahrradnabengetrieben nachteilig, da der vorhandene Raum stark begrenzt ist.

Aus US 4,052,914 , die als nächstliegender Stand der Technik augesehen wird, ist ein Fahrradnabengetriebe mit einem Antriebselement und einem Antriebselement bekannt. Zwischen dem Antriebselement und dem Abtriebselement ist ein Mehrganggetriebe angeordnet. Ein Übertragungselement zur Kraftübertragung von dem Antriebselement über unterschiedliche Zahnradgruppen auf das Abtriebselement ist in unterschiedliche Übertragungsstellung axial verschiebbar. Hierbei weist das Übertragungselement mindestens zwei Kraftübertragungsflächen auf.

Aufgabe der Erfindung ist es, ein Fahrradnabengetriebe zu schaffen, das insbesondere für Mountainbikes und Trekkingfahrräder geeignet ist.

Die Lösung der Aufgabe erfolgt erfindungsgemäß durch die Merkmale des Anspruchs 1.

Das erfindungsgemäße Fahrradnabengetriebe weist ein Antriebselement sowie ein Abtriebselement auf. Bei dem Antriebselement handelt es sich beispielsweise um ein Ritzel oder eine Ritzelkassette. Das Abtriebselement ist üblicherweise das Nabengehäuse, mit dem über Speichen die Hinterradfelge verbunden ist. Zwischen dem Antriebselement und dem Abtriebselement ist ein Mehrganggetriebe angeordnet. Zur Kraftübertragung ist ein in unterschiedliche Übertragungsstellungen axial verschiebbares Übertragungselement vorgesehen. Je nach Übertragungsstellung erfolgt somit eine Kraftübertragung von dem Antriebselement über unterschiedliche Zahnradgruppen auf das Abtriebselement und somit ein Schalten des Getriebes. Erfindungsgemäß weist das Übertragungselement mindestens zwei Kraftübertragungsflächen auf, von denen mindestens eine eine axial Verzahnung aufweist. Über die mindestens zwei Kraftübertragungsflächen erfolgt je nach Übertragungsstellung des Übertragungselements die Kraftübertragung auf ein Zahnrad unterschiedlicher Zahnradgruppen. In zumindest einer der Übertragungsstellungen erfolgt die Kraftübertragung über eine Axialverzahnung. Die mindestens eine Axialverzahnung ist durch Verschieben des Übertragungselements mit einer Axialverzahnung eines Zahnrads einer der Zahnradgruppen in Eingriff bringbar, so dass die Kraftübertragung in dieser Übertragungsstellung von der Axialverzahnung des Übertragungselements auf die Axialverzahnung des Zahnrads der entsprechenden Zahnradgruppe erfolgt. Erfindungsgemäß ist ferner mindestens ein Federelement vorgesehen, durch das die in Eingriff befindlichen Axialverzahnungen im Eingriff gehalten werden. Das Federelement sowie die in Eingriff befindlichen Axialverzahnungen sind hierbei derart ausgebildet, dass diese zusätzlich als Freilauf wirken. Erfindungsgemäß kann somit über eine Axialverzahnung eine Kraftübertragung erfolgen, wobei die Axialverzahnungs-Paarung gleichzeitig als Freilauf fungiert. Durch das Vorsehen von Axialverzahnungen zur Kraftübertragung kann der Platzbedarf insbesondere gegenüber dem Vorsehen von Klinken zur Kraftübertragung erheblich reduziert werden. Durch die zusätzliche Ausgestaltung als Freilauf ist eine weitere Verringerung des Platzbedarfs verwirklicht.

Vorzugsweise weist das Übertragungselement der zwei insbesondere einander gegenüberliegende Kraftübertragungsflächen auf, die jeweils eine Axialverzahnung aufweisen. Durch axiales Verschieben des Übertragungselements kann somit auf einfache Weise ein Gangwechsel erfolgen, da durch eine einzige Verschiebung eine Axialverzahnung außer Eingriff und gleichzeitig die gegenüberliegende Axialverzahnung in Eingriff gebracht werden kann. Hierbei wirken die beiden Axialverzahnungen durch das Verschieben des Übertragungselements mit unterschiedlichen Axialverzahnungen von Zahnrädern unterschiedlicher Zahnradgruppen zusammen.

Bei einer besonders bevorzugten Weiterbildung der Erfindung ist in zumindest einer der Zahnradgruppen eine weitere Axialverzahnungs-Paarung vorgesehen, die ebenfalls ein die Axialverzahnung in Eingriff haltendes Federelement ausweist. Die Axialverzahnungs-Paarung sowie das Federelement ist hierbei derart ausgebildet und angeordnet, dass diese zusätzlich als Freilauf ausgebildet sind. Bei der besonders bevorzugten Weiterbildung der Erfindung ist somit innerhalb des Kraftübertragungsweges einer Zahnradgruppe eine weitere Axialverzahnungs-Paarung zur Kraftübertragung vorgesehen, die zusätzlich als Freilauf wirken kann. In bevorzugter Ausführungsform weist das Fahrradnabengetriebe zumindest in einer Schaltstellung innerhalb des Kraftflusses zwei Freiläufe auf. Ein besonderer Vorteil der als Freilauf ausgeprägten Schaltkupplung besteht darin, dass beim Rückwärtstreten nicht das gesamte Getriebe mit bewegt werden muss. Hierdurch ist ein geringer Widerstand realisiert. Betrachtet man den Kraftpfad vom Antrieb zum Abtrieb, ist bei einer besonders bevorzugten erfindungsgemäßen Ausführungsform stets ein Freilauf vor dem Getriebe angeordnet.

Die Axialverzahnungen sind vorzugsweise zumindest teilweise mit rampenförmigen Zähnen versehen. Die Kraftübertragung erfolgt hierbei über die steilere Flanke, so dass in entgegengesetzter Drehrichtung ein Gleiten der Zähne über die flachere Flanke zur Realisierung des Freilaufs erfolgt.

In besonders bevorzugter Weiterbildung der Erfindung weist ein mit der Axialverzahnung des Übertragungselements zusammenwirkendes Zahnrad zur Kraftübertragung eine Radialverzahnung auf. Mit Hilfe dieser Radialverzahnung erfolgt eine Kraftübertragung auf ein weiteres Zahnrad oder Zwischenelement der entsprechenden Zahnradgruppe. Die Radialverzahnung ist hier vorzugsweise derart ausgebildet, dass eine Axialverschiebung innerhalb der Radialverzahnung erfolgen kann. Hierdurch kann auf einfache Weise ein axiales Verschieben des mit dem Übertragungselement zusammenwirkenden Zahnrads erfolgten, so dass in einfacher Weise der Freilauf realisiert ist. Vorzugsweise wirkt die Kraft des Federelements auf die entsprechende Axialverzahnungs-Paarung der Axialverschiebung entgegen. Wirkt die Axialverzahnungs-Paarung als Freilauf, wird das Federelement jeweils zusammengedrückt, wenn die beiden, insbesondere flacheren Flanken übereinander gleiten. Das Federelement drückt sodann die Axialverzahnungs-Paarung axial wieder ineinander, so dass eine der Freilauffunktion entgegenwirkende Kraftübertragung jederzeit wieder möglich ist, ohne dass eine der beiden Zahnräder einen langen freien Weg zurücklegen muss, in dem keine Kraftübertragung erfolgen kann.

Bei einer besonders bevorzugten Ausführungsform der Erfindung sind die Federelemente zumindest teilweise als Wellenscheiben ausgebildet. Hierbei handelt es sich um blattfederartige Ringe, die insbesondere aus Federstahl hergestellt sind. Diese Ringen weisen eine Wellenstruktur auf. Als Wellenscheiben ausgebildete Federelemente weisen insbesondere axial einen geringen Bauraum auf. Dies ist bei dem erfindungsgemäßen Fahrradnabengetriebe von erheblichem Vorteil, da ein Ziel der Konstruktion der Fahrradnabe darin besteht, diese möglichst klein und somit auch leicht auszugestalten. Ein besonderer Vorteil von Wellenscheiben besteht darin, dass Wellenscheiben bei einem relativ großen Durchmesser eine sehr geringe Höhe aufweisen. Das Verhältnis von Höhe zu Durchmesser kann insbesondere kleiner als 0,1 sein. Die bei derartig geringem Bauraum von einer Wellenscheibe aufbringbare Federkraft kann von einer konventionellen Schraubenfeder nicht erzielt werden. Ferner entspricht die Blockhöhe einer Wellenscheibe ihrer Blechdicke und ist somit erheblich geringer als die Blockhöhe einer Schraubenfeder.

Besonders bevorzugt ist es, mehrere Wellenscheiben vorzusehen, wobei zwischen den Wellenscheiben stets eine Distanzscheibe angeordnet ist. Beim Vorsehen von drei Wellenscheiben sind somit zwei Distanzscheiben zwischen den jeweils benachbarten Wellenscheiben angeordnet. Die Distanzscheiben weisen hierbei vorzugsweise eine ähnliche Dicke wie die Wellenscheiben auf. Die Wellenscheiben sind vorzugsweise zueinander verdreht angeordnet, so dass jeweils ein Wellental auf einem Wellenberg liegt. Hierbei sind bei dem Vorsehen von drei Wellenscheiben somit vorzugsweise die beiden äußeren Wellenscheiben gleich ausgerichtet und die mittlere Wellenscheibe um einen entsprechenden Winkel verdreht. Es handelt sich somit vorzugsweise um eine Reihenschaltung mehrere Wellenscheiben und Distanzscheiben. Bei dem Komprimieren dieses Wellenscheiben-Distanzscheiben-Pakets werden die gewellten Wellenscheiben in eine annähernd ungewellte Form und die ebenen Distanzscheiben in eine gewellte Form gedrückt. Insofern fungieren auch die Distanzscheiben als Federelemente. Durch die Anordnung von Wellenscheiben und Distanzscheiben ist auf einfache Weise eine Gesamtfederkennlinie sehr exakt und kostengünstig einstellbar.

Bei einer weiteren besonders bevorzugten Ausführungsform der Erfindung weist das Mehrganggetriebe ein Drei-Gang-Planetengetriebe auf. Insbesondere ist ausschließlich ein Drei-Gang-Planetengetriebe vorgesehen. Mit einem Drei-Gang-Planetengetriebe, dessen besonders bevorzugte Ausführungsform nachstehend erläutert ist, kann eine große Spreizung bei gleichzeitig geringem Gewicht erzielt werden. Die Erfindung einer Axialverzahnungs-Paarung zur Kraftübertragung mit integriertem Freilauf wird nachfolgend anhand der besonderes bevorzugten Ausführungsform der Verwendung eines Drei-Gang-Planetengetriebes näher erläutert, wobei die Erfindung auch bei anderen Fahrradnabengetrieben verwirklicht werden kann.

Hierbei ist zwischen dem Antriebselement und dem Abtriebselement ein insbesondere in die Hinterradnabe integriertes Drei-Gang-Planetengetriebe angeordnet. Es ist somit möglich, mit einem einzigen Planetengetriebe drei unterschiedliche Gänge, nämlich einen Normalgang, einen Berggang mit entsprechender Untersetzung, sowie einen Schnellgang mit entsprechender Übersetzung zu realisieren. Zum Wechsel der drei Gänge ist das axial verschiebbare Übertragungselement vorgesehen. Dieses ist vorzugsweise ring- oder scheibenförmig ausgebildet und umgibt vorzugsweise die Hinterradachse. Die Kraftübertragung erfolgt somit zunächst von dem Ritzel auf das Übertragungselement. Dies kann durch eine sowohl mit dem Ritzel als auch mit dem Übertragungselement verbundene Welle oder Achse erfolgen.

Gegebenenfalls kann das axiale Verschieben des Übertragungselements auch unabhängig von einer derartigen die Drehbewegung übertragenden Welle erfolgen.

In dem Normalgang, in dem weder eine Über- noch eine Untersetzung erfolgt, erfolgt die Kraftübertragung von dem Übertragungselement auf einen Planetenträger des Planetengetriebes und von dem Planetenträger unmittelbar auf das Abtriebselement. Im Normalgang erfüllt das Planetengetriebe somit lediglich die Funktion der Kraftübertragung über den Planetenträger. Eine Über- oder Untersetzung erfolgt nicht. Im Schnellgang, in dem man Übersetzung von beispielsweise i = 0,7 realisiert werden kann, erfolgt die Kraftübertragung von dem Übertragungselement auf den Planetenträger, von dem Planetenträger auf die Planeten und von diesem über das Hohlrad auf das Abtriebselement. Bei einem Berggang, bei dem eine Untersetzung von beispielsweise i = 1,44 erfolgt, wird die Kraft von dem Übertragungselement auf das Hohlrad, von diesem auf die Planeten und sodann von dem Planetenträger auf das Abtriebselement übertragen. Erfindungswesentlich ist hierbei insbesondere die Vertauschung der beteiligten Bauteile des Planetengetriebes zwischen Schnellgang und Berggang. Im Schnellgang erfolgt der Antrieb des Planetengetriebes über den Planetenträger und der Abtrieb über das Hohlrad. Im Berggang erfolgt der Antrieb des Planetengetriebes in umgekehrter Reihenfolge, d.h. über das Hohlrad und der Abtrieb sodann über den Planetenträger. Bezogen auf das Planetengetriebe erfolgt somit zwischen Schnellgang und Berggang ein Vertauschen von Antrieb und Abtrieb. Die Sonne, des Planetenbetriebes ist vorzugsweise drehfest mit der Achse verbunden.

Insbesondere durch die Nutzung eines einzigen Planetengetriebes als Drei-Gang-Getriebe ist es möglich, durch das Planetengetriebe die drei Kettenblätter zu ersetzen. Die Schaltfunktion der drei Kettenblätter wird somit in das Planetengetriebe verlagert, da es innerhalb der Fahrradnabe angeordnet ist. Im Bereich des Tretlagers muss somit nur noch ein einziges Kettenblatt vorgesehen werden. Ferner ist das Vorsehen eines Umwerfers in diesem Bereich nicht mehr erforderlich. Aufgrund der äußerst kompakten Bauweise und der Nutzung eines Planetengetriebes als Drei-Gang-Getriebe kann ferner ein vergleichsweise leichtes Getriebe realisiert werden.

In einer besonders bevorzugten Weiterbildung des erfindungsgemäßen Fahrradnabengetriebes ist zwischen dem Übertragungselement, das wie vorstehend beschrieben eine Axialverzahnung aufweist, und dem Zahnrad der entsprechenden Zahnradgruppe, mit dem das Übertragungselement in Eingriff bringbar ist, dieses als Freilaufelement ausgebildet. Ferner kann zwischen dem Planetenträger und dem Abtriebselement ein Freilaufelement angeordnet. Erfindungsgemäß kann hierbei über das Freilaufelement einerseits eine Kraftübertragung und je nach Gang auch ein Freilauf realisiert werden, so dass zwei Zahnräder des Freilaufs gegeneinander verdreht werden können. Dieser kann auch als herkömmlicher Freilauf genutzt werden, wenn keine Kraftübertragung erfolgt, oder der Fahrradfahrer rückwärts tritt. Das erfindungsgemäße Freilaufelement weist hierbei in besonders bevorzugter Ausführungsform zwei Zahnräder auf, die jeweils eine Axial- bzw. Stirnverzahnung aufweisen. Über die Axialverzahnung kann bei entsprechender Drehrichtung eine Kraftübertragung erfolgen. Bei entgegengesetzter Drehrichtung, wenn beispielsweise nicht oder rückwärts getreten wird, rutschen die entsprechend ausgeformten rampenförmigen Zähne der Axialverzahnung übereinander. Vorzugsweise ist eines der beiden Zahnräder des Freilaufs in Richtung des anderen Zahnrades federbelastet, um sicherzustellen, dass die Stirnverzahnung zur Kraftübertragung ineinander greift.

Insbesondere im Schnellgang, in dem die Kraftübertragung von dem Hohlrad auf das Abtriebselement wie das Nabengehäuse erfolgt, ist das entsprechende Freilaufelement vorteilhaft, da im Schnellgang zwischen dem Planetenträger und dem Abtriebselement keine Kraftübertragung erfolgt, da sich das Abtriebselement schneller als der Planetenträger dreht. Durch das Vorsehen des Freilaufs ist auf einfache Weise realisiert, dass zwischen Planetenträger und Abtriebselement keine Kraftübertragung im Schnellgang erfolgt. Dies könnte dadurch gelöst werden, dass im Schnellgang die Verbindung zwischen Planetenträger und Abtriebselement gelöst wird. Dies wäre durch axiales Verschieben einer der beiden Zahnräder bzw. Zahnscheiben ebenfalls möglich.

Zum Vereinfachen des Schaltens der Gänge, insbesondere zwischen Normalgang und Schnellgang ist in einer bevorzugten Weiterbildung der Erfindung zwischen dem Übertragungselement und dem Planetenträger ein Zwischenelement vorgesehen. Das Zwischenelement weist die Axialverzahnung auf, die mit der Axialverzahnung des Übertragungselements zusammenwirkt. Das Zwischenelement stellt somit das erste Element einer der Zahnradgruppen dar. Das Zwischenelement ist axial verschiebbar, jedoch drehfest mit dem Planetenträger verbunden. Hierdurch ist es möglich, von dem Übertragungselement in zwei unterschiedlichen Schaltstellungen über das Zwischenelement auf dem Planetenträger Kraft zu übertragen. Dies erfolgt in der Schaltstellung Schnellgang, sowie in der Schaltstellung Normalgang. Bei einem Verschieben des Übertragungselements zwischen dem Schnellgang und dem Normalgang wird das erste Zwischenelement somit mit verschoben. Dies kann auf einfache Weise dadurch erfolgen, dass das Zwischenelement in Richtung des Übertragungselements federbelastet ist und beim Schalten zwischen Normalgang und Berggang an einem Anschlag anstößt, so dass das erste Zwischenelement bei diesem Schaltvorgang nicht mehr mit verschoben wird. Ebenso kann auch eine Verbindung zwischen dem ersten Zwischenelement und dem Übertragungselement vorgesehen sein, die beim Schalten von Normalgang in Berggang gelöst wird. Besonders bevorzugt ist es, dass die Kraftübertragung zwischen dem Übertragungselement und dem ersten Zwischenelement über eine Stirnverzahnung erfolgt. Dies hat den erheblichen Vorteil, dass auch dieser Bereich der Kraftübertragung als Freilauf fungieren kann.

Im Schnellgang erfolgt eine Kraftübertragung von dem Hohlrad auf das Abtriebselement. Die Verbindung muss für den Normalgang, und den Berggang gelöst werden. Dies kann beispielsweise durch Verschieben eines zwischen dem Hohlrad und dem Abtriebselement wie dem Nabengehäuse angeordnetes Verbindungselement erfolgen. Ein entsprechendes Verbindungselement könnte unmittelbar zwischen einer Außenseite des Hohlrades und einer Innenseite eines zylindrischen Abtriebselements bzw. Nabengehäuses erfolgen. Bevorzugt ist die Ausgestaltung des Verbindungselementes derart, dass auch hier eine Kraftübertragung über eine Stirnverzahnung erfolgen kann. Besonders bevorzugt ist es hierbei, dass die Kraftübertragung von dem Hohlrad auf das Verbindungselement und von diesem über ein zweites Zwischenelement auf das Abtriebselement erfolgt. Das zweite Zwischenelement ist hier bei bevorzugter Ausführungsform mit einer Stirnverzahnung versehen, die mit einer Stirnverzahnung des Verbindungselementes zusammenwirkt. Es ist sodann wiederum möglich, das Verbindungselement und/oder das zweite Zwischenelement federbelastet auszubilden, dass auch hier ein weiterer Freilauf realisiert werden kann. Ferner ist es bevorzugt, das zweite Zwischenelement derart auszugestalten, dass es zwar drehfest mit dem Abtriebselement, jedoch axial verschiebbar gegenüber diesem angeordnet ist. Hierdurch kann durch Vorsehen einer Feder nicht nur auf einfach Weise ein Freilauf realisiert, sondern im Normalgang, und Berggang auch eine Trennung zwischen Hohlrad und Abtriebselement erfolgen, in dem die Trennung zwischen dem Verbindungselement und dem zweiten Zwischenelement realisiert wird. Dies ist auf einfache Weise möglich, in dem das zweite Zwischenelement insbesondere zusammen mit dem Übertragungselement verschoben wird und somit die Stirnverzahnung des zweiten Zwischenelements außer Eingriff bezogen auf die Stirnverzahnung des Verbindungselements gelangt.

Um einen möglichst kompakten Aufbau des Fahrradnabengetriebes zu realisieren, ist es in bevorzugter Ausführungsform des Getriebes erfindungswesentlich, dass der Freilauf in das Getriebe integriert ist. Der Freilauf ist somit durch Bauteile des Getriebes realisiert, die auch zur Kraftübertragung dienen. Die kompakte Bauweise wird ferner dadurch verbessert, dass das Übertragungselement zwei insbesondere einander gegenüberliegende Axial- bzw. Stirnverzahnungen aufweist. Hierdurch ist es möglich, dass das Übertragungselement in unterschiedlichen Schaltzuständen jeweils für eine der beiden Axialverzahnungen Kraft übertragen kann. Über die vorzugsweise zweite Axialverzahnung des Übertragungselements erfolgt vorzugsweise im Berggang eine Übertragung der Kraft von dem

Übertragungselement auf das Hohlrad, insbesondere über das Verbindungselement und eine entsprechend an dem Verbindungselement vorgesehene in Richtung des Übertragungselements weisende Stirnverzahnung.

Zur Verringerung der Fertigungstiefe ist es bevorzugt möglichst identische Zahnformen in unterschiedlichen Bauteilen zu verwenden. So ist es bevorzugt, dass die Axial- bzw. Stirnverzahnungen identische Zahnformen aufweisen. Insbesondere sind auch die Durchmesser dieser Verzahnungen bei möglichst vielen, insbesondere bei allen Bauteilen identisch, so dass zur Herstellung dieselben Werkzeuge genutzt werden können. Bevorzugt ist es ferner, dass auch die eingesetzten Pass- bzw. Radialverzahnungen vorzugsweise ebenfalls identisch ausgebildet sind. Ebenso ist es möglich, auch bei axial nicht verschiebbaren miteinander verbundenen Bauteilen zur Kraftübertragung entsprechende Passverzahnungen vorzusehen und diese sodann miteinander zu verkleben. Vorzugsweise sind alle Axialverzahnungs-Paare, die als Freilauf wirken können, auf demselben Durchmesser angeordnet. Hierdurch kann die Fertigungstiefe erheblich verringert werden. Besonders bevorzugt ist es hierbei, dass es sich um einen möglichst kleinen identischen Durchmesser handelt, so dass das Fahrradnabengetriebe kompakt ausgebildet ist.

Das erfindungsgemäße Fahrradgetriebe weist vorzugsweise einschließlich der Ritzelkassette ein Gewicht von weniger als 1 kg auf.

Nachfolgend wird die Erfindung anhand einer bevorzugten Ausführungsform unter Bezugnahme auf die anliegenden Zeichnungen näher erläutert.

Es zeigen:
- Figur 1: eine schematische Prinzipdarstellung des erfindungsgemäßen Fahrradnabengetriebes im Querschnitt in dem Schaltzugstand Schnellgang,
- Figur 2: eine der Figur 1 entsprechende Darstellung des Fahrradnabengetriebes im Normalgang,
- Figur 3: eine der Figur 1 entsprechende Darstellung des Fahrradnabengetriebes im Berggang,
- Figur 4: eine exemplarische schematische Darstellung eines Zahnrades mit als Freilauf fungierender Axial- bzw. Stirnverzahnung, sowie einer Radialverzahnung, die ein axiales Verschieben des Bauteils ermöglicht, und
- Figur 5: eine exemplarische schematische perspektivische Darstellung eines als Wellenscheiben ausgebildeten Federelements.

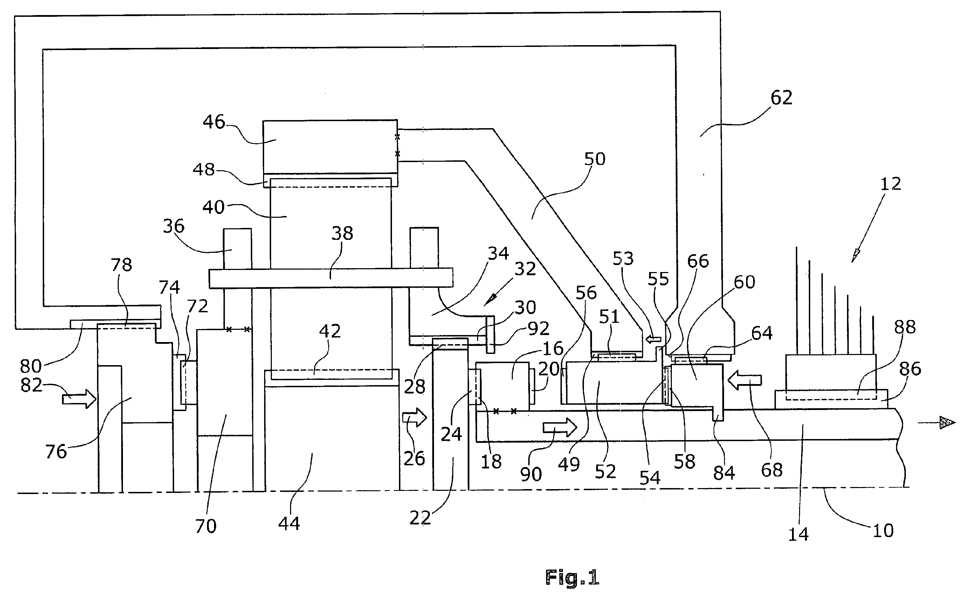

Die Darstellung in den Figuren 1 bis 3 erfolgt aus Gründen der Übersichtlichkeit im Halbschnitt, wobei die Bauteile zur Hinterradachse 10 rotationssymmetrisch sind.

Die Krafteinleitung erfolgt über eine Kette oder einen Riementrieb auf eine Ritzelkassette 12. Diese weist mehrere Zahnräder mit unterschiedlicher Zähnezahl bzw. unterschiedlichem Durchmesser auf. Die Ritzelkassette 12 ist gegenüber der Achse 10 drehbar, jedoch nicht axial verschiebbar. Die Kraftübertragung erfolgt sodann von der Ritzelkassette 12 auf ein im dargestellten Ausführungsbeispiel als Hohlwelle ausgebildetes Schaltelement 14. Das Schaltelement 14 befindet sich in Figur 1 in dem Schaltzustand Schnellgang.

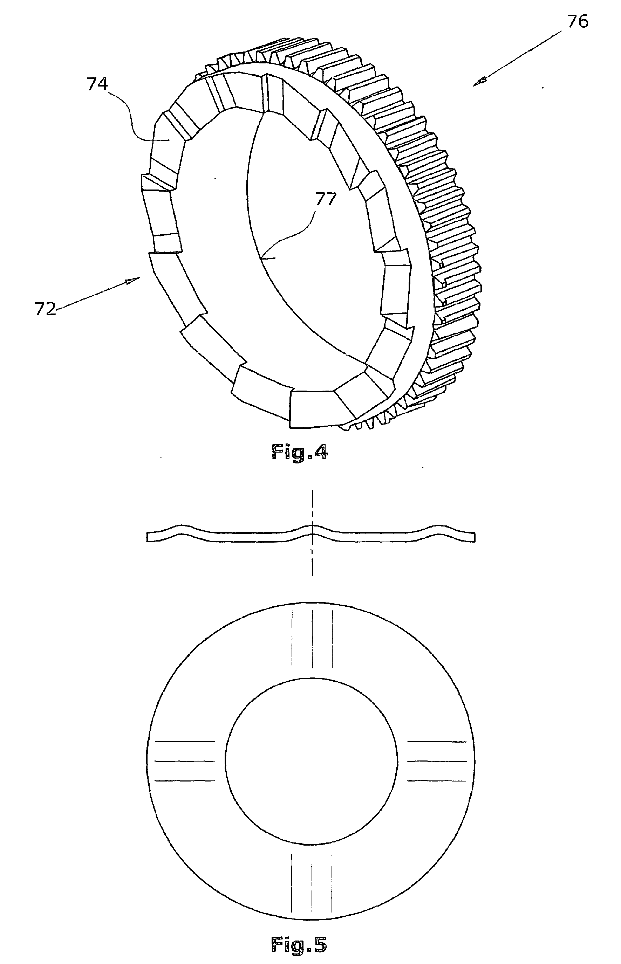

Im Schnellgang erfolgt die Kraftübertragung von dem Schaltelement 14 auf das fest mit dem Schaltelement 14 verbundene Übertragungselement 16. Das Übertragungselement 16 ist im dargestellten Ausführungsbeispiel ringförmig ausgebildet und umgibt die Achse 10. Die drehfeste Verbindung zwischen dem Schaltelement 14 und dem Übertragungselement 16 kann auch über eine verklebte Passverzahnung erfolgen. Beispielsweise kann eine Passverzahnung nach DIN 5480 vorgesehen werden, bei der das Zahnlückenspiel so eingestellt werden kann, dass anstatt einer Verklebung eine flankenzentrierte Übergangs- oder auch Übermaßpassung erzeugt werden kann. Bei einer derart engen Passung kann ein Verkleben entfallen. Ferner weist das Übertragungselement 16 an seinen beiden Stirnseiten jeweils eine Axialverzahnung 18, 20 auf. Über die innere Stirnverzahnung 18 erfolgt ein Übertragen der Drehbewegung auf das erste Zwischenelement 22. Das erste Zwischenelement 22 ist ein scheiben- oder ringförmig ausgebildetes Zahnrad und weist eine Stirnverzahnung 24 auf, die in die Stirnverzahnung 18 des Übertragungselements 16 eingreift. Zur sicheren Kraftübertragung sowie zur zusätzlichen Realisierung eines Freilaufs ist das erste Zwischenelement 22 einerseits, wie durch die Feder 26 dargestellt, in Richtung des Übertragungselements 16 federbelastet und weist andererseits eine sägezahnförmige Axialverzahnung 24 auf. Hierbei ist die Feder 26 in einer bevorzugten erfindungsgemäßen Ausgestaltung als Wellenscheibe, wie in Figur 5 dargestellt, ausgebildet.

Auch sämtliche weiteren Axial- bzw. Stirnverzahnungen, die das erfindungsgemäße Fahrradnabengetriebe aufweist, sind als Sägezähne ausgebildet und dienen somit je nach Drehrichtung zur Kraftübertragung oder als Freilauf. Ferner ist das erste Zwischenelement 22 axial verschiebbar. Die axiale Verschiebbarkeit ist durch eine radiale Verzahnung 28 an einer Außenumfangsfläche des Zwischenelements 22 realisiert, die in eine entsprechende radiale Verzahnung 30 eines Planetenträgers 32 eingreift. Durch eine derartige Verzahnung ist einerseits eine Kraftübertragung, d.h. eine drehfeste Verbindung, und andererseits eine axiale Verschiebbarkeit ermöglicht. Bei der Verzahnung 28, 30 handelt es sich ebenfalls um eine Passverzahnung, das heißt eine drehfeste Wellen-Naben-Verbindung, wobei alle Zähne gleichzeitig im Eingriff sind.

Die Übertragung der Drehbewegung des ersten Zwischenelements 22 erfolgt somit über die radiale Verzahnung 28, 30 auf den Planetenträger 32. Der Planetenträger 32 weist ein erstes Stegteil 34, sowie ein gegenüberliegendes Stegteil 36 auf. Die beiden Stegteile 34, 36 sind über vorzugsweise vier Achsen 38 miteinander verbunden, wobei auf jeder der Achsen 38 ein Planet 40 frei drehbar angeordnet ist. Der Planetenträger 32 ist in bevorzugter Ausführungsform einteilig ausgebildet, so dass eine Gewichtsreduzierung möglich ist.

Eine Außenverzahnung 42 der Planeten 40 greift in eine Sonne 44 ein, so dass sich die Planeten 40 auf der Sonne 44 abwälzen. Die Sonne 44 ist drehfest mit der Achse 10, die ebenfalls drehfest mit dem Fahrradrahmen verbunden ist, gehalten. Koaxial zu der Sonne 44 ist ein Hohlrad 46 angeordnet. Das Hohlrad 46 weist eine Innenverzahnung 48 auf, die mit der Verzahnung 42 kämmt.

Im Schnellgang (Fig. 1) erfolgt die Kraftübertragung von dem Planetenträger 32 auf die Planeten 40 und von diesen auf das Hohlrad 46. Das Hohlrad 46 ist fest mit einem Verbindungselement 50 verbunden. Das Verbindungselement 50 ist derart ausgebildet, dass es in Richtung des Schaltelements 14 bzw. der Achse 10 gebogen ist und an seinem in Richtung der Achse 10 weisenden Ende mit einem Ringelement 52 verbunden ist. Die Verbindung erfolgt durch eine an dem Verbindungselement 50 vorgesehen Verzahnung 49, die in eine am Umfang des Ringelements 52 angeordnete Verzahnung 51 eingreift. In axialer Richtung wirkt eine durch einen Pfeil 53 dargestellte Feder, die sich an einem Ansatz 55 abstützt, auf das Verbindungselement 50. Hierbei sind sämtliche Zähne der Verzahnung 51, 49 stets im Eingriff. Es erfolgt kein Abwälzen dieser Zähne aufeinander. Durch die Feder 53 ist die Oszillation des Ringelements 52 ermöglicht, um im Freilaufmodus dieses stets wieder zurück in Eingriff zu drücken.

Das Ringelement 52 umgibt das Schaltelement 14 und weist zwei einander gegenüberliegende jeweils in axiale Richtung weisende Stirnverzahnungen 54, 56 auf. Die äußere Stirnverzahnung 54 greift im Schnellgang in eine Stirnverzahnung 58 eines zweiten Zwischenelements 60. Das zweite Zwischenelement 60 ist drehfest mit dem Abtriebselement bzw. dem Nabengehäuse 62 verbunden. Die drehfeste Verbindung erfolgt über eine Radialverzahnung 64, die an einer Umfangsfläche des zweiten Zwischenelements vorgesehen ist und in eine entsprechende Verzahnung 66 des Nabengehäuses 62 eingreift. Das Zwischenelement ist somit drehfest mit dem Nabengehäuse 62 verbunden, jedoch axial in dem Nabengehäuses 62 verschiebbar. Die Verzahnung 64, 66 wälzt ebenfalls nicht aufeinander ab. Vielmehr sind stets alle Zähne in Eingriff. Um eine sichere Kraftübertragung zwischen den Stirnverzahnungen 54, 58 zu gewährleisten und andererseits diese Verzahnung auch als Freilauf nutzen zu können, ist das zweite Zwischenelement 60 wie durch den Pfeil 68 angedeutet in Richtung des Ringelements 52 federbelastet. Aufgrund des Vorsehens der Feder 53 ist auch ein zumindest geringfügiges axiales Verschieben des Ringelements 52 möglich, so dass auch dieses als Freilauf dienen kann. Bei der in Figur 1-3 als Pfeil dargestellten Feder 53 handelt es sich in bevorzugter Ausführungsform wiederum um eine die Achse 10 umgebende Wellenscheibe (Figur 5).

Das Abtriebselement 62, bei dem es sich im dargestellten Ausführungsbeispiel um die Hinterradnabe handelt, ist wie üblich über Speichen mit der Hinterradfelge verbunden.

Im Schnellgang (Figur 1) erfolgt die Kraftübertragung somit von der Ritzelkassette 12 über das Schaltelement 14, das Übertragungselement 16, das erste Zwischenelement 22, dem Planetenträger 32, die Planeten 40, das Hohlrad 46, das Verbindungselement 50, das Ringelement 52 und das zweite Zwischenelement 60 auf das Nabengehäuse 62.

Das in Figur 1 linke Stegteil 36 bzw. die linke Stegseite bei einem einstückigen Steg des Planetenträgers 32 ist fest mit einem Zahnrad 70 verbundenen, das die Achse 10 umgibt. Das Zahnrad 70 weist eine Stirnverzahnung 72 auf, die in eine Stirnverzahnung 74 eines weiteren Zahnrads 76 eingreift. Das Zahnrad 76, das ebenfalls die Achse 10 ringförmig umgibt, ist über eine radiale Verzahnung 78 mit einer ebenfalls radialen Verzahnung 80 des Nabengehäuses 62 drehfest aber axial verschiebbar verbunden. Die Verzahnung 78, 80 wälzt nicht aufeinander ab. Vielmehr sind sämtliche Zähne stets in Eingriff. Ferner ist das Zahnrad 76 in Richtung des Zahnrads 70, wie durch den Pfeil 82 dargestellt, federbelastet. Auch bei der Feder 82 handelt es sich in bevorzugter Ausführungsform um eine die Achse 10 umgebende Wellenscheiben (Figur 5).

In dem in Figur 1 dargestellten Schnellgang erfolgt über die Zahnradanordnung 70, 76 keine Kraftübertragung, vielmehr fungiert diese als Freilauf, da aufgrund der Übersetzung durch das Planetengetriebe sich das Nabengehäuse 62 1,44 mal schneller dreht als der Planetenträger. Beim Schnellgang erfolgt die Kraftübertragung somit von dem Ritzel 12 auf das Schaltelement 14 und von diesem über die Zahnradgruppe 24, 34, 38, 40, 46, 50, 52 und 60 auf das Abtriebselement bzw. das Nabengehäuse 62.

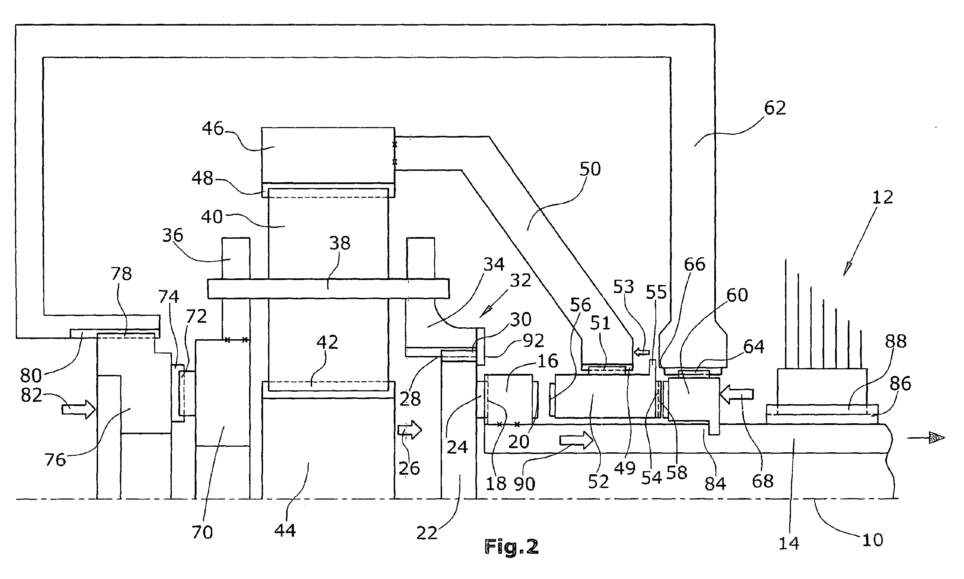

Zum Schalten des Planetengetriebes aus dem Schnellgang (Figur 1) in den Normalgang (Figur 2) wird das Schaltelement 14 nach außen bzw. in Figur 1 nach rechts verschoben. Bei einem über einen Bowdenzug betätigten Schaltelement 14 erfolgt dies durch Spannen des Bowdenzugs. Beispielsweise kann das Bewegen des Schaltelements 14 über eine Schalthülse 15 erfolgen. Die Schalthülse 15 weist ein nicht dargestelltes, beispielsweise mit einem schräg verlaufenden Langloch versehenes Rotationselement auf. Das Rotationselement wird mit Hilfe des Bowdenzugs gedreht, wobei aufgrund des schrägen Langlochs die Drehung in eine Translation umgewandelt wird. Das Betätigen des Bowdenzugs erfolgt über einen herkömmlichen Schalthebel, der insbesondere am Fahrradlenker angeordnet ist. Das Bewegen des Schaltelements 14 in die entgegengesetzte Richtung, d.h. ein Schalten von dem Normalgang, (Figur 2) in den Schnellgang (Figur 1) erfolgt sodann aufgrund der vorgesehenen Federn. Durch eine andere Anordnung oder Ausgestaltung der Federn wäre es ferner möglich, das Schalten aus dem Schnellgang in den Normalgang durch Federkraft oder in umgekehrte Richtung durch den Bowdenzug entsprechend aufgebrachte Druckkräfte vorzunehmen.

Beim Schalten von dem Schnellgang (Figur 1) in den Normalgang (Figur 2) wird zusammen mit dem Schaltelement 14 das Übertragungselement 16 sowie das erste Zwischenelement 22 nach rechts bzw. bezogen auf das Nabengehäuse 62 nach außen verschoben. Ferner erfolgt ein axiales Verschieben des zweiten Zwischenelements 60 ebenfalls nach außen. Dies ist dadurch realisiert, dass das zweite Zwischenelement 60 zwar einerseits gegenüber dem Schaltelement 14 drehbar ist, jedoch axial fixiert ist. Die axiale Fixierung zwischen dem zweiten Zwischenelement 60 und dem Schaltelement 44 erfolgt durch einen Sicherungsring 84, der in eine entsprechende Nut oder Ausnehmung des Zwischenelements greift.

Da das Schaltelement 14 gegenüber der Ritzelkassette 12 ebenfalls axial verschiebbar ist, erfolgt selbstverständlich auch kein Verschieben der Ritzelkassette 12. Diese axiale Verschiebbarkeit ist ebenfalls durch eine entsprechende radiale Verzahnung 86, 88 realisiert. Auch die übrigen Bauteile des Fahrradnabengetriebes werden bei der Überführung von dem Schnellgang in den Normalgang nicht verschoben.

In dem Normalgang wurde das zweite Zwischenelement 60 gegen die Federkraft 68 nach außen verschoben, so dass die Stirnverzahnung 54, 58 zwischen dem zweiten Zwischenelement 60 und dem Ringelement 52 des Verbindungselements 50 geöffnet ist und hier keine Kraftübertragung mehr erfolgt. Aufgrund der Feder 26 wurde das erste Zwischenelement 22 jedoch zusammen mit dem Übertragungselement 16, sowie dem Schaltelement 14 nach außen verschoben. Es erfolgt somit weiterhin eine Kraftübertragung von dem Übertragungselement 16 auf das erste Zwischenelement 22 und von diesem auf den Planetenträger 32. Die in Figur 2 durch den Pfeil 68 dargestellte Federkraft wird wiederum in bevorzugter Ausführungsform durch eine platzsparende Wellenscheibe (Figur 5) erzeugt.

Im Normalgang, in dem weder eine Unter- noch Übersetzung durch das Getriebe erfolgen soll, wird die Kraft somit über die Ritzelkassette 12 eingeleitet und auf das Schaltelement 14 übertragen. Von diesem erfolgt ein Übertragen der Kraft auf das Übertragungselement 16, das erste Zwischenelement 22 und dem Planetenträger 32. Da das Hohlrad 46 nicht mehr über das Verzahnungspaar 54, 58 mit dem Abtriebselement 62 verbunden ist, erfolgt keine Kraftübertragung im Normalgang zwischen dem Planeten 40 und dem Hohlrad 46. Vielmehr erfolgt die Kraftübertragung über den Planetenträger 32 bzw. dessen beiden über die Achsen 38 verbundenen Stegelemente 34, 36. Die Kraft erfolgt von dem Stegelement 36 auf das Zahnrad 70 und von diesem über die Stirnverzahnungen 72, 74 auf das zweite Zahnrad 76. Da das Zahnrad 76 drehfest mit dem Nabengehäuse 62 über die Verzahnung 78, 80 verbunden ist, erfolgt die Kraftübertragung sodann von dem Zahnrad 76 auf das Nabengehäuse 62. Hierbei erfolgt weder eine Übernoch eine Untersetzung.

Im Normalgang (Fig. 2) erfolgt die Kraftübertragung somit über die Zahnradgruppe 34, 36, 38, 70, 76 auf das Abtriebselement bzw. das Nabengehäuse 62.

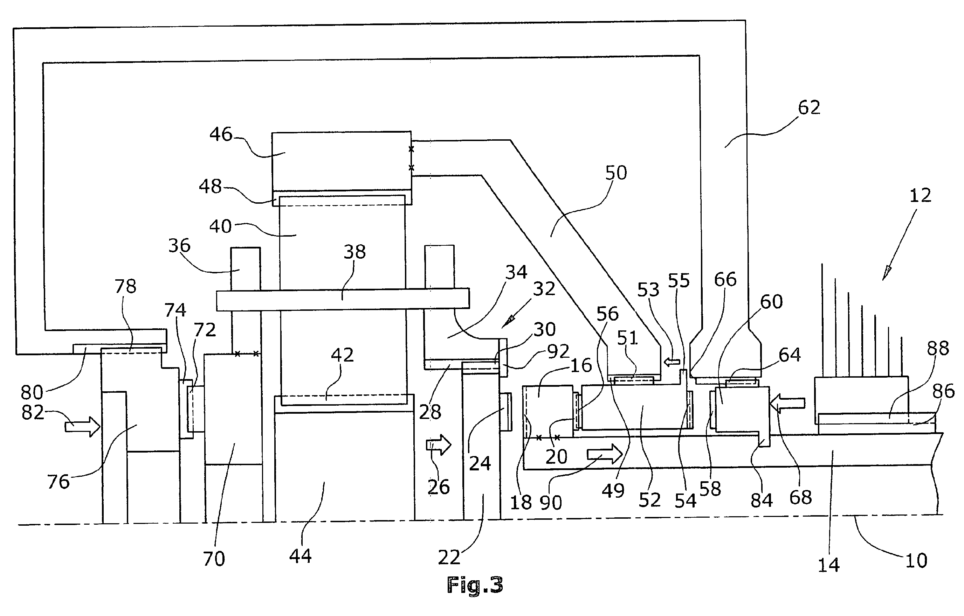

Im Berggang (Figur 3) wird das Schaltelement 14 gegenüber dem Normalgang (Figur 2) weiter nach außen bzw. rechts verschoben. Auch hierbei erfolgt bei einer Betätigung des Schaltelements 14 über einen Bowdenzug wiederum ein Spannen des Bowdenzugs und ein Verschieben der Schalthülse 15 sowie des Schaltelements 14 nach außen gegen ein durch einen Pfeil 90 angedeutetes Federelement. Auch bei diesem Federelement handelt es sich in bevorzugter Ausführungsform um eine Wellenscheibe (Figur 5). Das erste Zwischenelement 22 bzw. die mit dem ersten Zwischenelement 22 verbundene Feder 26 kann kein weiteres Verschieben in Figur 2 nach rechts bzw. nach außen bewirken, da das erste Zwischenelement 22 von der Feder 26 gegen einen Absatz 92 gedrückt wird, der mit dem Stegteil 34 des Planetenträgers 32 verbunden ist. Dies hat zur Folge, dass die Stirnverzahnung 18, 24 außer Eingriff gebracht wird und durch die Axialverschiebung des Schaltelements 14 sodann für den Berggang die Stirnverzahnung 20 des Übertragungselements 16 in Eingriff gelangt mit der Stirnverzahnung 56 des Ringelements 52. Da das zweite Zwischenelement 60 gegen die Federkraft 68 weiter nach außen verschoben wurde, ist die Stirnverzahnung 54 weiterhin nicht in Eingriff mit der Stirnverzahnung 58.

Vielmehr erfolgt von dem Übertragungselement 16 im Berggang (Figur 3) eine Übertragung der Kraft über das Ringelement 52 auf das Verbindungselement 50 und von diesem auf das Hohlrad 46. Über die Verzahnung 48 des Hohlrads 46 erfolgt ein Antreiben der Planeten 40, die sich auf der Sonne 44 abwälzen. Dies bewirkt ein Drehen des Planetenträgers 32. Von dem Planetenträger 32 bzw. dessen Stegteil 36 erfolgt die Kraftübertragung auf das fest mit dem Stegteil 36 verbundene Zahnrad 70 und von diesem über die Stirnverzahnung 72, 74 auf das zweite Zahnrad 76. Das zweite Zahnrad 76, das durch den Schaltvorgang nicht verschoben wird, ist weiterhin drehfest mit dem Nabengehäuse 62 verbunden, so dass die Übertragung der Kraft von dem Zahnrad 76 auf das Nabengehäuse 62 erfolgt. Im Berggang erfolgt somit durch das Planetengetriebe eine Untersetzung.

Im Berggang (Figur 3) erfolgt die Kraftübertragung somit über die Zahnradgruppe 36, 40, 46, 50, 52 und 76 auf das Abtriebselement bzw. das Nabengehäuse 62.

Zur Verdeutlichung des Aufbaus der Zahnräder ist in Figur 4 schematisch das Zahnrad 76 dargestellt. Hieraus ist die sägezahnartige Ausgestaltung der Stirnverzahnung 72 sowie die radiale Verzahnung am Umfang ersichtlich. Über die Sägezähne 74 kann Kraft nur in eine Richtung übertragen werden. In die andere Drehrichtung rutschen die Flanken übereinander, so dass ein Freilauf realisiert ist. Aufgrund der Verzahnung 78 ist ein axiales Verschieben bei gleichzeitiger drehfester Verbindung möglich. Die übrigen Stirnverzahnungen des Getriebes sind entsprechend ausgebildet. Dies gilt auch für die übrigen Radialverzahnungen des Getriebes. Auf eine Rückseite 77 des Zahnrades 72 wirkt das Federelement 82, bei dem es sich um eine Wellenscheibe handelt (Figur 5). Durch die in Seitenansicht wellenartige Struktur der Wellenscheibe 92 kann durch diese eine Federkraft erzeugt werden. Ggf. sind mehrere vorzugsweise gegeneinander verdreht angeordnete Wellenscheiben zu einem Wellenscheiben-Paket zusammengefasst, um die Kraft zu erhöhen.

Die als Freilauf erfindungsgemäß ausgeprägten Schaltkupplungen weisen insbesondere den Vorteil auf, dass bezogen auf den Kraftpfad stets vor dem Getriebe ein entsprechender Freilauf angeordnet ist. Wird das Getriebe beispielsweise im Normalgang betrieben, so befindet sich die Doppelklinke 16 mit der Steg-Klinke 22 im Eingriff. Der Abstand zwischen der Doppelklinke 16 und der Zahnradgruppe 52 beträgt in einer Ausführungsform beispielsweise nur 0,2 mm. Wird nun vom Normalgang, in den Berggang geschaltet, erfolgt ein Verschieben der Doppelklinke 16 um einen Millimeter nach rechts in den Figuren. Bei dieser Schaltbewegung befindet sich die Doppelklinke 16 die ersten 0,8 mm der Bewegung noch im Eingriff mit der Klinke 22, berührt aber gleichzeitig schon die Zahnradgruppe 52. Die Zahnradgruppe 52 dreht schneller als die Doppelklinke 16. Daher muss für den Schaltprozess diese Verbindung als Freilauf ausgebildet sein, da ansonsten das Getriebe blockieren würde. Dies weist ferner den Vorteil auf, dass die Nabe durchtrittsicher ist, d.h. dass in keiner Schaltposition eine Leerlaufposition existiert. Durch den geringen Spalt zwischen den Klinken wird während der Schaltbewegung ein Doppeleingriff realisiert. Aufgrund der unterschiedlichen Drehzahlen der Eingriffspartner ist ein Freilauf vorgesehen.

## Patentansprüche

1. Fahrradnabengetriebe, mit
einem Antriebselement (12) und einem Abtriebselement (62), wobei zwischen dem Antriebselement (12) und dem Abtriebselement (62) ein Mehrganggetriebe angeordnet ist, und
einem axial in unterschiedliche Übertragungsstellungen verschiebbaren Übertragungselement (14, 16) zur Kraftübertragung vom Antriebselement (12) über unterschiedliche Zahnradgruppen (24, 34, 38 40, 46, 50, 52, 60; 34, 36, 38, 70, 76; 36, 40 ,46, 50, 52, 76) auf das Abtriebselement (62), wobei das Übertragungselement (14, 16) mindestens zwei Kraftübertragungsflächen aufweist,
**dadurch gekennzeichnet, dass**
mindestens eine der Kraftübertragungsflächen eine Axialverzahnung (18, 20) aufweist, die mit einer Axialverzahnung eines Zahnrads (22, 52) einer der Zahnradgruppen (24, 34, 38 40, 46, 50, 52, 60; 34, 36, 38, 70, 76; 36, 40 ,46, 50, 52, 76) durch Verschieben des Übertragungselements (14, 16) in Eingriff bringbar ist, und
mindestens einem die in Eingriff befindlichen Axialverzahnungen in Eingriff haltenden Federelement (26, 53, 68, 82),
wobei die in Eingriff befindliche Axialverzahnung (18, 24; 72, 74; 20, 56; 58, 64) zusammen mit dem Federelement (26, 53, 68, 82) zusätzlich als Freilauf ausgebildet ist.

2. Fahrradnabengetriebe nach Anspruch 1, **dadurch gekennzeichnet, dass** das Übertragungselement (14, 16) zwei insbesondere einander gegenüberliegende Kraftübertragungsflächen mit Axialverzahnungen (18, 20) aufweist.

3. Fahrradnabengetriebe nach Anspruch 2, **dadurch gekennzeichnet, dass** die beiden Axialverzahnungen (18, 20) durch Verschieben des Übertragungselements (14, 16) mit unterschiedlichen Axialverzahnungen (24, 56) von Zahnrädern (22, 52) unterschiedlicher Zahnradgruppen (24, 34, 38 40, 46, 50, 52, 60; 34, 36, 38, 70, 76; 36, 40 ,46, 50, 52, 76) in Eingriff bringbar sind.

4. Fahrradnabengetriebe nach einem der Ansprüche 1 bis 3, **dadurch gekennzeichnet, dass** in zumindest einer der Zahnradgruppen (24, 34, 38 40, 46, 50, 52, 60; 34, 36, 38, 70, 76; 36, 40 ,46, 50, 52, 76) eine Axialverzahnungs-Paarung (72, 74; 54, 58; 18, 24; 20, 56) vorgesehen ist, die ein die Axialverzahnung in Eingriff haltendes Federelement (68, 82) aufweist und zusätzlich als Freilauf ausgebildet ist.

5. Fahrradnabengetriebe nach einem der Ansprüche 1 bis 4, **dadurch gekennzeichnet, dass** zumindest in einer, vorzugsweise in allen Schaltstellungen, mindestens zwei zusätzlich als Freilauf wirkende Axialverzahnungs-Paarungen (72, 74; 54, 58; 18, 24; 20, 56) im Kraftfluss vorgesehen sind.

6. Fahrradnabengetriebe nach einem der Ansprüche 1 bis 5, **dadurch gekennzeichnet, dass** in allen Schaltstellungen eine Axialverzahnungs-Paarung (18, 24; 20, 56) zwischen dem Antriebselement (12) und dem Mehrganggetriebe angeordnet ist.

7. Fahrradnabengetriebe nach einem der Ansprüche 4 bis 6, **dadurch gekennzeichnet, dass** alle Axialverzahnungs-Paarungen (72, 74; 54, 58; 18, 24; 20, 56), die als Freilauf wirken können, auf demselben Durchmesser, insbesondere dem kleinsten selben Durchmesser, angeordnet sind.

8. Fahrradnabengetriebe nach einem der Ansprüche 4 bis 7, **dadurch gekennzeichnet, dass** alle Axialverzahnungs-Paarungen (72, 74; 54, 58; 18, 24; 20, 56) und/oder alle Passverzahnungs-Paarungen (78, 80; 28, 30; 49, 51; 66, 64) im Wesentlichen identisch ausgebildet sind.

9. Fahrradnabengetriebe nach einem der Ansprüche 1 bis 8, **dadurch gekennzeichnet, dass** die Axialverzahnung (24, 28, 54, 56, 58, 72 ,74) rampenförmige Zähne aufweist.

10. Fahrradnabengetriebe nach einem der Ansprüche 1 bis 9, **dadurch gekennzeichnet, dass** ein mit der Axialverzahnung (18, 20) des Übertragangselements (14, 16) zusammenwirkendes Zahnrad (22, 52) eine Radialverzahnung (30, 51) aufweist, die mit einer Radialverzahnung (28, 49) eines Zahnrads (34, 50) oder eines Zwischenelements der Zahnradgruppe (24, 34, 38 40, 46, 50, 52, 60; 34, 36, 38, 70, 76; 36, 40 ,46, 50, 52, 76) in Eingriff steht und axial verschiebbar ist.

11. Fahrradnabengetriebe nach Anspruch 10, **dadurch gekennzeichnet, dass** die Kraft des auf die entsprechende Axialverzahnungs-Paarung (28, 30; 49, 51) wirkende Federelement (26, 53) der Axialverschiebung entgegenwirkt.

12. Fahrradnabengetriebe nach einem der Ansprüche 1 bis 11, **dadurch gekennzeichnet, dass** die Federelemente (26, 53, 68, 82) zumindest teilweise als Wellenscheiben ausgebildet sind.

13. Fahrradnabengetriebe nach einem der Ansprüche 1 bis 12, **dadurch gekennzeichnet, dass** das Mehrganggetriebe ein Drei-Gang-Planetengetriebe aufweist.

## Claims

1. A bicycle hub gear comprising
an input element (12) and an output element (62), wherein a multi-speed gear is arranged between the input element (12) and the output element (62), and
a transmission element (14, 16), adapted to be displaced axially into different transmission positions, for the transmission of force from the input element (12) to the output element (62) via different sets of gears (24, 34, 38, 40, 46, 50, 52, 60; 34, 36, 38, 70, 76; 36, 40, 46, 50, 52, 76), the transmission element (14, 16) comprising at least two force transmission surfaces,
**characterized in that**
at least one of the force transmission surfaces comprises an axial toothing (18, 20) adapted to be engaged with a gear (22, 52) of one of the sets of gears (24, 34, 38, 40, 46, 50, 52, 60; 34, 36, 38, 70, 76; 36, 40, 46, 50, 52, 76) by shifting the transmission element (14, 16), and
at least one spring element (26, 53, 68, 82) for keeping the meshing axial toothings in engagement,
wherein the meshing axial toothing (18, 24; 72, 74; 20, 56; 58, 64), together with the spring element (26, 53, 68, 82) is additionally designed as a freewheel mechanism.

2. The bicycle hub gear of claim 1, **characterized in that** the transmission element (14, 16) comprises two, in particular opposed force transmission surfaces with axial toothings (18, 20).

3. The bicycle hub gear of claim 2, **characterized in that** the two axial toothings (18, 20) are adapted to be engaged with different axial toothings (24, 56) of gears (22, 52) of different sets of gears (24, 34, 38, 40, 46, 50, 52, 60; 34, 36, 38, 70, 76; 36, 40, 46, 50, 52, 76) by shifting the transmission element (14, 16).

4. The bicycle hub gear of one of claims 1 to 3, **characterized in that** an axial toothing combination (72, 74; 54, 58; 18, 24; 20, 56) is provided in at least one of the sets of gears (24, 34, 38, 40, 46, 50, 52, 60; 34, 36, 38, 70, 76; 36, 40, 46, 50, 52, 76), which combination comprises a spring element (68, 82) keeping the meshing axial toothings in engagement and is additionally designed as a freewheel mechanism.

5. The bicycle hub gear of one of claims 1 to 4, **characterized in that** at least in one, preferably in all gear shifting positions at least two axial toothing combinations (72, 74; 54, 58; 18, 24; 20, 56) are provided in the flux of force that additionally act as freewheel mechanisms.

6. The bicycle hub gear of one of claims 1 to 5, **characterized in that** in all gear shifting positions an axial toothing combination (18, 24; 20, 56) is arranged between the input element (12) and the multi-speed gear.

7. The bicycle hub gear of one of claims 4 to 6, **characterized in that** all axial toothing combinations (72, 74; 54, 58; 18, 24; 20, 56) that can act as freewheel mechanisms are arranged on the same diameter, in particular on the smallest same diameter.

8. The bicycle hub gear of one of claims 4 to 7, **characterized in that** all axial toothing combinations (72, 74; 54, 58; 18, 24; 20, 56) and/or all spline combinations (78, 80; 28, 30; 49, 51; 66, 64) are substantially of identical design.

9. The bicycle hub gear of one of claims 1 to 8, **characterized in that** all axial toothings (24, 28, 54, 56, 58, 72, 74) comprise ramp-shaped teeth.

10. The bicycle hub gear of one of claims 1 to 9, **characterized in that** a gear (22, 52) cooperating with the axial toothing (18, 20) of the transmission element (14, 16) has a radial toothing (30, 51) meshing with a radial toothing (28, 49) of a gear (34, 50) or an intermediate element of the set of gears (24, 34, 38, 40, 46, 50, 52, 60; 34, 36, 38, 70, 76; 36, 40, 46, 50, 52, 76) and is displaceable in the axial direction.

11. The bicycle hub gear of claim 10, **characterized in that** the force of the spring element (26, 53) acting on the corresponding axial toothing combination (28, 30; 49, 51) acts against axial displacement.

12. The bicycle hub gear of one of claims 1 to 11 **characterized in that** the spring elements (26, 53, 68, 82) are at least partly configured as wave washers.

13. The bicycle hub gear of one of claims 1 to 12, **characterized in that** he multi-speed gear comprises a three speed planetary gearing.

## Revendications

1. Engrenage de moyeu de bicyclette, comprenant
un élément d'entraînement d'entrée (12) et un élément d'entraînement de sortie (62), dans lequel une transmission multirapport est disposée entre l'élément d'entraînement d'entrée (12) et l'élément d'entraînement de sortie (62), et
un élément de transmission (14, 16) pouvant être décalé axialement dans différentes positions de transmission pour la transmission de force de l'élément d'entraînement d'entrée (12) par l'intermédiaire de différents ensembles à roues dentées (24, 34, 38, 40, 46, 50, 52, 60 ; 34, 36, 38, 70, 76 ; 36, 40, 46, 50, 52, 76) sur l'élément d'entraînement de sortie (62), dans lequel l'élément de transmission (14, 16) présente au moins deux surfaces de transmission de force,
**caractérisé en ce que**
au moins une des surfaces de transmission de force présente une denture axiale (18, 20) qui, au moyen du décalage de l'élément de transmission (14, 16), peut être mise en prise avec une denture axiale d'une roue dentée (22, 52) d'un des ensembles à roues dentées (24, 34, 38, 40, 46, 50, 52, 60 ; 34, 36, 38, 70, 76 ; 36, 40, 46, 50, 52, 76), et
au moins un élément à ressort (26, 53, 68, 82) qui maintient en prise les dentures axiales se trouvant en prise,
dans lequel la denture axiale (18, 24 ; 72, 74 ; 20, 56 ; 58, 64) en prise est en plus réalisée, conjointement avec l'élément à ressort (26, 53, 68, 82), en tant que roue libre.

2. Engrenage de moyeu de bicyclette selon la revendication 1, **caractérisé en ce que** l'élément de transmission (14, 16) présente deux surfaces de transmission de force avec des dentures axiales (18, 20), en particulier deux surfaces de transmission de force opposées.

3. Engrenage de moyeu de bicyclette selon la revendication 2, **caractérisé en ce que** les deux dentures axiales (18, 20) peuvent être mises en prise avec différentes dentures axiales (24, 56) de roues dentées (22, 52) de différents ensembles à roues dentées (24, 34, 38, 40, 46, 50, 52, 60 ; 34, 36, 38, 70, 76 ; 36, 40, 46, 50, 52, 76) au moyen du décalage de l'élément de transmission (14, 16).

4. Engrenage de moyeu de bicyclette selon l'une quelconque des revendications 1 à 3, **caractérisé en ce qu'**un appariement de dentures axiales (72, 74 ; 54, 58 ; 18, 24 ; 20, 56) est prévu dans au moins un des ensembles à roues dentées (24, 34, 38, 40, 46, 50, 52, 60 ; 34, 36, 38, 70, 76 ; 36, 40, 46, 50, 52, 76), lequel appariement présente un élément à ressort (68, 82) qui maintient la denture axiale en prise et qui est en plus réalisé en tant que roue libre.

5. Engrenage de moyeu de bicyclette selon l'une quelconque des revendications 1 à 4, **caractérisé en ce qu'**au moins deux appariements de dentures axiales (72, 74 ; 54, 58 ; 18, 24 ; 20, 56) fonctionnant en plus en tant que roue libre sont prévus au moins dans une, de préférence dans toutes les positions de commutation de la chaîne cinématique.

6. Engrenage de moyeu de bicyclette selon l'une quelconque des revendications 1 à 5, **caractérisé en ce qu'**un appariement de dentures axiales (18, 24 ; 20, 56) est prévu dans toutes les positions de commutation entre l'élément d'entraînement d'entrée (12) et la transmission multirapport.

7. Engrenage de moyeu de bicyclette selon l'une quelconque des revendications 4 à 6, **caractérisé en ce que** tous les appariements de dentures axiales (72, 74 ; 54, 58 ; 18, 24 ; 20, 56) qui peuvent fonctionner en tant que roue libre sont disposés sur le même diamètre, en particulier sur le même plus petit diamètre.

8. Engrenage de moyeu de bicyclette selon l'une quelconque des revendications 4 à 7, **caractérisé en ce que** tous les appariements de dentures axiales (72, 74 ; 54, 58 ; 18, 24 ; 20, 56) et/ou tous les appariements à cannelure d'emmanchement (78, 80 ; 28, 30 ; 49, 51 ; 66, 64) sont réalisés essentiellement de manière identique.

9. Engrenage de moyeu de bicyclette selon l'une quelconque des revendications 1 à 8, **caractérisé en ce que** la denture axiale (24, 28, 54, 56, 58, 72, 74) présente des dents en forme de rampe.

10. Engrenage de moyeu de bicyclette selon l'une quelconque des revendications 1 à 9, **caractérisé en ce qu'**une roue dentée (22, 52) fonctionnant conjointement avec la denture axiale (18, 20) de l'élément de transmission (14, 16) présente une denture radiale (30, 51) qui est en prise avec une denture radiale (28, 49) d'une roue dentée (34, 50) ou d'un élément intermédiaire de l'ensemble à roues dentées (24, 34, 38, 40, 46, 50, 52, 60 ; 34, 36, 38, 70, 76 ; 36, 40, 46, 50, 52, 76) et qui peut être décalée dans le sens axial.

11. Engrenage de moyeu de bicyclette selon la revendication 10, **caractérisé en ce que** la force de l'élément à ressort (26, 53) s'exerçant sur l'appariement de dentures axiales correspondant (28, 30 ; 49, 51) agit dans le sens contraire au décalage axial.

12. Engrenage de moyeu de bicyclette selon l'une quelconque des revendications 1 à 11, **caractérisé en ce que** les éléments à ressort (26, 53, 68, 82) sont réalisés au moins en partie sous la forme de rondelles ondulées.

13. Engrenage de moyeu de bicyclette selon l'une quelconque des revendications 1 à 12, **caractérisé en ce que** la transmission multirapport présente un engrenage planétaire à 3 vitesses.
